# EUROPÄISCHE PATENTSCHRIFT

(11) **EP 4 014 002 B1**
(45) Veröffentlichungstag und Bekanntmachung des Hinweises auf die Patenterteilung: **28.06.2023**
(21) Anmeldenummer: 20753334.0
(22) Anmeldetag: 05.08.2020
(51) Int. Cl.: F27B 7/38, C04B 7/43, F27D 15/02, C04B 7/47

(54) **KÜHLER ZUM KÜHLEN VON SCHÜTTGUT**
COOLER FOR COOLING BULK MATERIAL
APPAREIL RÉFRIGÉRANT PERMETTANT DE REFROIDIR UN MATÉRIAU EN VRAC

(30) Priorität: 14.08.2019 DE 102019121870
(43) Veröffentlichungstag der Anmeldung: 22.06.2022
(73) Patentinhaber: thyssenkrupp Industrial Solutions AG, 45143 Essen (DE); thyssenkrupp AG, 45143 Essen (DE)
(72) Erfinder: ALTFELD, Jochen, 48167 Münster (DE); RIEGER, Rolf, 33602 Bielefeld (DE); BISPING, Justin, 48231 Warendorf (DE)
(74) Vertreter: thyssenkrupp Intellectual Property GmbH
(86) Internationale Anmeldenummer: PCT/EP2020/071988
(87) Internationale Veröffentlichungsnummer: WO 2021/028287

(56) Entgegenhaltungen:
- WO-A1-2017/042176

## Beschreibung

Die Erfindung betrifft einen Kühler zum Kühlen von heißem Schüttgut, insbesondere von Zementklinker.

Bei der Herstellung von Zement wird üblicherweise Zementklinker in einem kontinuierlichen Prozess in einem Drehrohrofen gebrannt und folglich ein mehr oder weniger konstanter Strom von heißem Zementklinker an einem Auftragsende des Drehrohrofens an einen (Klinker-)Kühler übergeben, mittels dessen der Zementklinker auf eine für die weitere Handhabung geeignete Temperatur gekühlt und dabei gleichzeitig von dem Austragsende des Drehrohrofens abtransportiert wird. Solche Klinkerkühler weisen üblicherweise eine Mehrzahl von zumindest quer zur Förderrichtung nebeneinander angeordneten Belüftungsböden auf, auf denen der heiße Zementklinker als Schüttgut aufliegt und die von einem Kühlgas durchströmt werden. Ein Transport des heißen Zementklinkers bei einem solchen Klinkerkühler erfolgt üblicherweise durch eine zyklische Vor- und Zurückbewegung der Belüftungsböden selbst in und entgegen der Förderrichtung oder durch zusätzliche Mitnahmeelemente, von denen ebenfalls mehrere zumindest quer zur Förderrichtung nebeneinander angeordnet sind und die relativ zu den dann statisch gehaltenen Belüftungsböden in und entgegen der Förderrichtung vor- und zurückbewegt werden. Eine Mitnahme des heißen Zementklinkers als Schüttgut insgesamt in der vorgesehenen Förderrichtung erfolgt bei solchen Klinkerkühlern mit vor- und zurückbewegten Förderelementen (d.h. den beweglichen Belüftungsböden oder Mitnahmeelemente) dadurch, dass die mehreren quer zur Förderrichtung nebeneinander angeordneten Förderelemente gleichzeitig in Förderrichtung und zeitlich versetzt voneinander entgegen der Förderrichtung bewegt werden.

Ein Kühler zum Kühlen von heißem Schüttgut und insbesondere von Zementklinker, bei dem statische Belüftungsböden und dazu relativ bewegliche Mitnahmeelemente vorgesehen sind, ist aus der WO 2017/042176 A1 bekannt. Dieser Kühler umfasst ein statisches Traggestell, das eine Mehrzahl von sich in einer Querrichtung des Kühlers erstreckenden statischen Querträgern aufweist. Weiterhin sind eine Mehrzahl von statischen Längsträgern vorgesehen, die sich in einer Längsrichtung des Kühlers erstrecken und die an den Querträgern befestigt sind. Diese Längsträger sind in Form von einfachen Metallprofilen mit rechteckigen Vollquerschnittsflächen ausgeführt.

Der Kühler gemäß der WO 2017/042176 A1 umfasst weiterhin eine Mehrzahl von Belüftungsböden zur Ablage des Schüttguts, wobei die Belüftungsböden in der Hochrichtung des Kühlers verlaufende Durchgangsöffnungen für einen Durchlass einer Kühlgasströmung aufweisen. Die Belüftungsböden liegen dabei auf einer Bodenplatte auf, die ihrerseits auf den Längsträgern sowie den Querträgern abgestützt ist. Eine Mehrzahl von Förderelementen, die jeweils einen Antriebsträger aufweisen, der sich zwischen zwei der Längsträger sowie zwischen zwei der Belüftungsböden in der Längsrichtung des Kühlers erstreckt, und die einen oder mehrere an den Antriebsträger angebundene Mitnahmeelemente aufweisen, die sich in Querrichtung des Kühlers über den Antriebsträger hinaus erstrecken, sind mittels einer Mehrzahl von Linearantrieben vor und zurück bewegbar. Die Linearantriebe sind dabei in Form von Hydraulikzylindern ausgebildet und diese sind jeweils einerseits an einem der Antriebsträger und andererseits an den Längsträgern, die diesen Antriebsträger zwischen sich aufnehmen, abgestützt.

Der Erfindung lag die Aufgabe zugrunde, den aus der WO 2017/042176 A1 bekannten Kühler hinsichtlich der konstruktiven Ausgestaltung und insbesondere hinsichtlich der Herstellungskosten und/oder des Gewichts zu verbessern.

Diese Aufgabe wird mittels eines Kühlers gemäß dem Patentanspruch 1 gelöst. Bevorzugte Ausgestaltungsformen eines solchen Kühlers sind Gegenstände der abhängigen Patentansprüche und ergeben sich aus der nachfolgenden Beschreibung der Erfindung.

Erfindungsgemäß ist ein Kühler zum Kühlen von Schüttgut, insbesondere von Zementklinker, vorgesehen, der gemäß dem aus der WO 2017/042176 A1 bekannten Kühler zumindest folgende Komponenten umfasst:
- ein Traggestell, das zumindest eine Mehrzahl von in einer Längsrichtung des Kühlers nebeneinander angeordneten und sich jeweils in einer Querrichtung des Kühlers erstreckenden, statischen (d.h. im Betrieb des Kühlers unbeweglichen gehaltenen) Querträgern;
- eine Mehrzahl von statischen Längsträgern, die in der Querrichtung des Kühlers nebeneinander angeordnet und sich in einer Längsrichtung des Kühlers erstrecken und die an den Querträgern befestigt sind;
- eine Mehrzahl von statischen Belüftungsböden zur Ablage des Schüttguts, wobei die Belüftungsböden in einer Hochrichtung des Kühlers verlaufende Durchgangsöffnungen für einen Durchlass einer Kühlgasströmung aufweisen,
- eine Mehrzahl von beweglichen (d.h. im Betrieb des Kühlers zur Erzielung einer Transportfunktion zu bewegenden) Förderelementen, wobei die Förderelemente jeweils
   - einen Antriebsträger aufweisen, der sich zwischen jeweils zwei der Belüftungsböden und vorzugsweise auch zwischen jeweils zwei der Längsträger in der Längsrichtung des Kühlers erstreckt, und
   - einen oder mehrere an den Antriebsträger angebundene Mitnahmeelemente aufweisen, die sich vorzugsweise in Querrichtung des Kühlers über den Antriebsträger hinaus erstrecken,
- eine Mehrzahl von Linearantrieben, die jeweils einerseits an einem der Antriebsträger und andererseits an zumindest einem der Längsträger abgestützt sind. Die Linearantriebe können dabei insbesondere in Form von pneumatischen oder hydraulischen Zylinder-Kolben-Einheiten ausgebildet sein.

Erfindungsgemäß gekennzeichnet ist ein solcher Kühler zudem dadurch, dass die Belüftungsböden direkt beziehungsweise unmittelbar oder indirekt auf Oberseiten der Längsträger angeordnet und mit den Längsträgern direkt oder indirekt verbunden sind, wobei die Antriebsträger (8) sich zwischen jeweils zwei der Längsträger (3) in der Längsrichtung des Kühlers erstrecken.

Die erfindungsgemäße Ausgestaltung eines Kühlers weist gegenüber der aus der der WO 2017/042176 A1 bekannten Konstruktion insbesondere zwei Vorteile auf, die jeweils darauf beruhen, dass die Belüftungsböden auf den Längsträger angeordnet und mit diesen verbunden sind. Durch diese Ausgestaltung kann nämlich auf die bei dem Kühler gemäß der der WO 2017/042176 A1 vorgesehene, zusätzliche Bodenplatte verzichtet werden, wodurch der erfindungsgemäße Kühler im Vergleich dazu konstruktiv relativ einfach und damit kostengünstig sowie relativ leicht ausgestaltet ist. Ein weiterer Vorteil, der sich daraus ergibt, liegt in einer verbesserten Abstützung der bei dem Transport von Schüttgut mittels des Kühlers auftretenden Kräfte, die primär einerseits in Hochrichtung des Kühlers durch das Abstützen der Gewichtskraft des Schüttgutbetts und andererseits in Längsrichtung des Kühlers aufgrund der von den Linearantrieben erzeugten und über die Förderelemente auf das Schüttgut übertragenen Förderkräfte wirken. Diesen Förderkräften wirken beim Fördern des Schüttgutbetts Reibungskräfte im Kontaktbereich zwischen dem zu fördernden Schüttgut einerseits und den statischen Belüftungsböden sowie den Förderelementen andererseits entgegen, wobei diese in Längsrichtung des Kühlers gerichteten Reibungskräfte von der Befestigung der Belüftungsböden an dem dazugehörigen Unterbau abgestützt werden müssen. Bei dem Kühler gemäß der WO 2017/042176 A1 müssen diese Reibungskräfte demnach einerseits von den Verbindungsstellen, an denen die Belüftungsböden mit der Bodenplatte verbunden sind, und andererseits von den Verbindungsstellen, an denen die Bodenplatte mit den Längsträgern und den Querträgern des Traggestells verbunden ist, abgestützt werden. Bei dem erfindungsgemäßen Kühler werden dafür dagegen lediglich die Verbindungsstellen genutzt, an denen die Belüftungsböden direkt oder indirekt mit den Längsträgern verbunden sind. Somit sind bei einem erfindungsgemäßen Kühler im Vergleich zu demjenigen gemäß der WO 2017/042176 A1 deutlich weniger Verbindungsstellen in der Übertragung von in den Längs- und Hochrichtungen des Kühlers wirkenden Kräften beteiligt, wodurch eine einfachere konstruktive Ausgestaltung für einen erfindungsgemäßen Kühler realisiert werden kann, was sich vorteilhaft hinsichtlich der Herstellungskosten und des Gewichts des Kühlers auswirkt.

Gemäß einer bevorzugten Ausgestaltungsform eines erfindungsgemäßen Kühlers können Linearführungen zur Führung von Bewegungen der Antriebsträger an den Längsträgern vorgesehen sein. Hierzu kann beispielsweise vorgesehen sein, dass eine dieser Komponenten, d.h. die Antriebsträger oder die Längsträger, jeweils mindestens eine Gleit- oder Wälzlagerführung und die andere dieser Komponenten jeweils mindesten sein in oder an der Gleit- oder Wälzlagerführung geführtes Führungselement aufweisen.

Gemäß einer ebenfalls bevorzugten Ausgestaltungsform eines erfindungsgemäßen Kühlers kann vorgesehen sein, dass die Längsträger in der Hochrichtung des Kühlers verlaufende Durchgangsöffnungen für einen Durchlass der Kühlgasströmung aufweisen. Dadurch wird in vorteilhafter Weise ermöglicht, dass sich die Längsträger möglichst über die gesamte Längsrichtung des Kühlers erstrecken können und gleichzeitig eine Zufuhr von Kühlgas zu den Belüftungsböden und damit auch durch die Belüftungsböden hindurch in das darauf aufliegende Schüttgut in vorteilhafter Weise ermöglicht wird.

Weiterhin bevorzugt kann vorgesehen sein, dass die Längsträger jeweils als Profilträger mit einer Oberwand und zwei sich von der Oberwand erstreckenden Seitenwänden ausgebildet sind. Die Oberwand und/oder die Seitenwände können dabei weiterhin bevorzugt eben ausgebildet sein, wodurch einerseits eine einfache Herstellbarkeit für solche Längsträger und andererseits eine vorteilhafte Abstützung und Verbindung zwischen diesen Längsträgern einerseits und den Querträgern, den Belüftungsböden sowie den Linearantrieben andererseits zu ermöglicht wird. Grundsätzlich können die Längsträger jedoch eine beliebige Querschnittsform und dabei sowohl einen Hohlquerschnitt als auch einen Vollquerschnitt aufweisen. Besonders bevorzugt ist es jedoch vorgesehen, dass die Profilträger zumindest teilweise (d. h. zumindest einige davon) und/oder abschnittsweise eine U-förmige Querschnittsfläche, insbesondere mit unten bzw. von den Belüftungsböden beabstandet liegender Querschnittsöffnung, aufweisen, wodurch bei ausreichender Stabilität ein möglichst geringer Materialeinsatz für die Ausbildung der Längsträger und damit für die Herstellung des Kühlers insgesamt erforderlich ist. Alternativ zu Längsträgern mit U-förmigen Querschnittsflächen können insbesondere aber auch solche mit rechteckigen Hohlquerschnitten vorgesehen sein.

Die zwei in Querrichtung des Kühlers jeweils außenliegenden Längsträger eines erfindungsgemäßen Kühlers können weiterhin bevorzugt Befestigungsmittel zur Befestigung mit einer Seitenwand des Kühlers oder mit einem außen liegenden Längsträger eines weiteren, insbesondere baugleichen Kühlers aufweisen. Dementsprechend kann ein erfindungsgemäßer Kühler auch als Teil einer modulartig aus einer Vielzahl solcher Kühler aufgebauten Kühlervorrichtung vorgesehen sein, wodurch in möglichst flexibler Weise eine Integration der Kühlervorrichtung in eine diese umfassende Anlage, beispielsweise in eine Anlage zur Herstellung von Zementklinker, ermöglicht wird. Die Befestigungsmittel können dabei beispielsweise in Form von Gewindebolzen und/oder in Form von Durchgangsöffnungen zur Aufnahme von Gewindebolzen mit dem Ziel der Ausbildung von Schraubverbindungen ausgebildet sein.

Gemäß einer weiterhin bevorzugten Ausgestaltungsform eines erfindungsgemäßen Kühlers kann vorgesehen sein, dass an den Längsträgern Dichtungsbauteile zur Abdichtung zwischen den Förderelementen und den Belüftungsböden befestigt sind, um ein Durchfallen von Partikeln des Schüttguts durch den Kühler grundsätzlich und insbesondere eine Verschmutzung der Linearantriebs und/oder der Linearführungen durch solche Partikel möglichst gering zu halten.

Gemäß einer bevorzugten Ausgestaltungsform eines erfindungsgemäßen Kühlers kann vorgesehen sein, dass die Förderelemente jeweils einen Zwischenträger aufweisen, wobei das oder die Mitnahmeelemente (direkt) mit dem Zwischenträger und der Zwischenträger (direkt) mit dem Antriebsträger verbunden sind, wobei als "Verbindung" auch eine einstückige Ausgestaltung gelten soll. Die Zwischenträger ermöglichen dabei insbesondere, auf möglichst einfache Weise eine Mehrzahl von insbesondere in Längsrichtung des Kühlers beabstandet angeordneten und mit dem Zwischenträger verbundenen Mitnahmeelementen mit den Antriebsträgern zu verbinden, wodurch die Herstellung und insbesondere Montage eines solchen erfindungsgemäßen Kühlers relativ einfach gehalten werden kann.

Besonders bevorzugt kann ein solcher erfindungsgemäßer Kühler dann auch noch dadurch gekennzeichnet sein, dass die Zwischenträger jeweils zwei Seitenwände (beispielsweise aufgrund einer U-förmige Querschnittsfläche mit nach unten bzw. den Belüftungsböden zugewandter Querschnittsöffnung) aufweisen, die jeweils auf der von dem Antriebsträger abgewandten Seite abdichtend neben einer sich beispielsweise in Hochrichtung des Kühlers erstreckenden, statischen Begrenzungswand geführt sind. Die Begrenzungswände können dabei beispielsweise jeweils Teil des angrenzenden Belüftungsbodens sein oder mit diesem verbunden sein, oder direkt oder indirekt mit jeweils einem der Längsträger verbunden sein. Die Zwischenträger bewirken dadurch in Überdeckung mit den Begrenzungswänden eine konstruktiv einfache aber gleichzeitig wirkungsvolle räumliche Trennung der Linearantriebe sowie von Linearführungen, mit denen die Förderelemente vorzugsweise beweglich an den Längsträgern gelagert sind, von dem auf den Belüftungsböden liegenden Schüttgut, so dass eine Beeinträchtigung der Funktion der Linearantriebe und der Linearführungen durch das Schüttgut vermieden wird.

Die Erfindung wird nachfolgend anhand eines in den Zeichnungen dargestellten Ausgestaltungsbeispiels näher erläutert. In den Zeichnungen zeigt, teilweise in vereinfachter Darstellung:

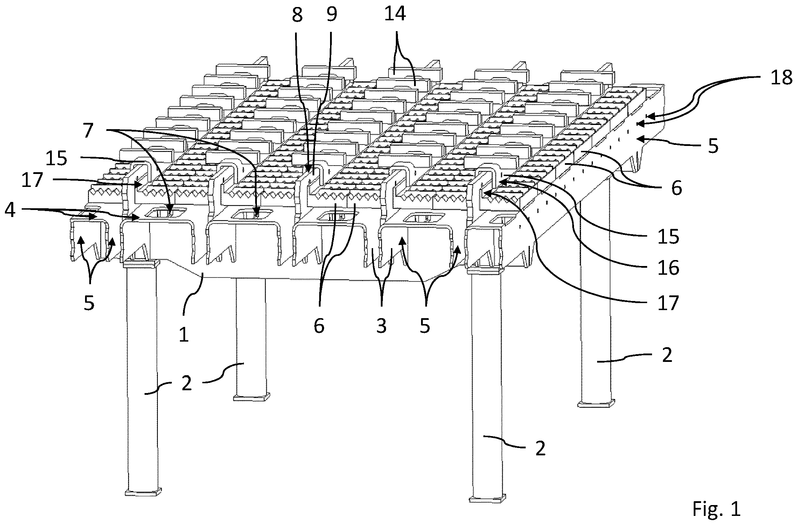

- Fig. 1:: einen Abschnitt eines erfindungsgemäßen Kühlers in einer perspektivischen Darstellung;
- Fig. 2:: ein Querschnitt durch einen Abschnitt des Kühlers, jedoch ohne Darstellung der dazugehörigen Belüftungsböden, sowie von Kraftflüssen, die im Betrieb des Kühlers auftreten; und
- Fig. 3:: in vereinfachter Darstellung eine Seitenansicht eines Abschnitts des Kühlers sowie eine Darstellung der in dem Betrieb des Kühlers auftretenden, in Längsrichtung des Kühlers wirkenden Kräfte.

Bei dem in den Zeichnungen dargestellten Kühler kann es sich insbesondere um ein Kühler zur Kühlung von Zementklinker handeln, der beispielsweise an einem Austragsende eines Drehrohrofens einer Anlage zur Herstellung von Zementklinker angeordnet sein und dazu dienen kann, Zementklinker, der in einem mehr oder weniger kontinuierlichen Prozess aus dem Drehrohrofen ausgetragen wurde, abzutransportieren und dabei zu kühlen.

Der Kühler umfasst ein Traggestell, das eine Mehrzahl von sich in einer Querrichtung des Kühlers und dabei im Wesentlichen horizontal erstreckenden Querträgern 1 aufweist, die auf Stützen 2 abgestützt sind, die sich in Hochrichtung des Kühlers sowie in vertikaler Richtung erstrecken. Weiterhin umfasst der Kühler eine Mehrzahl von Längsträgern 3, die sich in einer Längsrichtung des Kühlers und ebenfalls im Wesentlichen horizontal erstrecken, wobei die Längsträger 3, in paralleler Ausrichtung zueinander, bezüglich der Querrichtung des Kühlers nebeneinander angeordnet sind. Die Längsträger 3 sind jeweils als Profilträger mit U-förmiger Querschnittsfläche ausgebildet und diese weisen somit eine ebene Oberwand 4 sowie zwei sich im Wesentlichen in einem rechten Winkel der Oberwand 4 nach unten erstreckende Seitenwände 5 auf. Diese Seitenwände 5 der Längsträger 3 greifen in entsprechend dimensionierte Schlitzöffnungen der Querträger 1 ein, während die Oberwände 4 der Längsträger 3 beispielsweise auf den Oberseiten der Querträger 1 aufliegen. Für eine unbewegliche Verbindung zwischen den Querträgern 1 und den Längsträgern 3 können diese direkt miteinander verbunden, beispielsweise verschweißt und/oder verschraubt sein.

Auf Oberseiten der Oberwände der Längsträger 3 liegen direkt oder indirekt eine Mehrzahl von Belüftungsböden 6 auf, auf denen wiederum das Schüttgut beziehungsweise der Zementklinker aufliegen soll. Diese Belüftungsböden 6, die eine wellenförmig ausgebildete Oberseite aufweisen, bilden eine Vielzahl von relativ kleinen, in der Hochrichtung des Kühlers verlaufende Durchgangsöffnungen (nicht sichtbar) aus. Durch diese Durchgangsöffnungen sowie durch im Vergleich dazu deutlich größere Durchgangsöffnungen 7 in den Oberwänden der Längsträger 3 wird im Betrieb des Kühlers Kühlgas, insbesondere Kühlluft, geführt und dadurch von unten in das Schüttgut beziehungsweise in den Zementklinker eingeleitet. Dieses Kühlgas, dessen Strömung von einer unterhalb der Querträger und der Längsträger angeordneten Lüftervorrichtung (nicht dargestellt) bewirkt werden kann, durchströmt folglich das Schüttgut beziehungsweise den Zementklinker und nimmt dabei in erheblichem Maße Wärmeenergie von dem Schüttgut beziehungsweise dem Zementklinker auf, wodurch die gewünschte Kühlwirkung realisiert wird.

Zwischen jeweils zwei nebeneinander angeordneten Längsträgern 3 und auch zwischen den darauf angeordneten Belüftungsböden 6 ist ein sich in Längsrichtung des Kühlers erstreckender Freiraum vorgesehen, innerhalb dessen jeweils ein Antriebsträger 8 angeordnet ist. Diese Antriebsträger 8 ragen dabei nach oben aus diesen Freiräumen heraus und überragen damit die Belüftungsböden 6 ein Stück weit. Die Antriebsträger 8 umfassen jeweils einen als Flachprofil mit rechteckigem Querschnitt ausgebildeten Grundkörper 9, wobei die Breite dieses rechteckigen Querschnitts in Hochrichtung des Kühlers verläuft. Die Antriebsträger 8 sind jeweils Teil eines Förderelements, das mittels jeweils eines Linearantriebs, der beispielsweise in Form einer hydraulischen Zylinder-Kolben-Einheit ausgebildet ist, relativ zu den statischen Komponenten des Kühlers, d. h. insbesondere zu den Belüftungsböden 6, den Längsträgern 3, den Querträgern 1 und den Stützen 2, vor und zurück bewegbar ist. Hierfür sind die Antriebsträger 8 einerseits in Längsrichtung des Kühlers verschiebbar mittels Linearführungen gelagert. Diese Linearführungen umfassen beispielsweise Gleitlagerführungen 10, die auf den jeweils an einen Antriebsträger angrenzenden Seiten der Seitenwände 5 der Längsträger 3 befestigt sind und die jeweils eine sich in Längsrichtung des Kühlers erstreckende Führungsnut ausbilden, in die ein Führungselement 11 oder mehrere Führungselemente 11 der Antriebsträger 8 eingreift/eingreifen. Weiterhin ist an jeden der Antriebsträger der Kopf des Kolbens 12 einer dazugehörigen Zylinder-Kolben-Einheit angebunden, während das freie Ende des Zylinders 13 dieser Zylinder-Kolben-Einheit an denjenigen beiden Längsträgern 3 befestigt ist, die den jeweiligen Antriebsträger 8 zwischen sich aufnehmen. Durch ein zyklisches Ein- und Ausfahren der Zylinder-Kolben-Einheiten werden folglich zyklische Vor- und Zurückbewegungen der Antriebsträger 8 und damit der gesamten Förderelemente des Kühlers realisiert.

Neben den Antriebsträgern 8 umfassen die Förderelemente noch eine Mehrzahl von Mitnahmeelementen 14, die beispielsweise ebenfalls in Form von Flachprofilen mit rechteckigen Querschnitten ausgebildet sind, deren Längsachse sich jedoch in Querrichtung des Kühlers erstrecken. Eine Mehrzahl solcher Mitnahmeelemente 14 sind in einer sich in Längsrichtung des Kühlers erstreckenden Reihenanordnung mit jeweils einem Zwischenträger 15 verbunden. Konkret sind die Mitnahmeelemente 14 einstückig mit diesem Zwischenträger 15 ausgebildet, wobei die Zwischenträger 15 selbst U-förmige Querschnittsflächen mit nach unten weisenden Querschnittsöffnungen aufweisen. Die Zwischenträger 15 können dadurch jeweils derart auf dem die Belüftungsböden überragenden Abschnitt eines dazugehörigen Antriebsträgers 8 aufliegen und mit diesem verbunden (beispielsweise verschraubt oder mittels Bolzen oder Keilen verbunden) sein, dass zwei Seitenwände 16 der Zwischenträger 15 diese Abschnitte der jeweils dazugehörigen Antriebsträger 8 seitlich teilweise überdecken. Dabei überdecken die Seitenwände 16 der Zwischenträger 15 gleichzeitig jeweils eine Begrenzungswand 17 des angrenzenden Belüftungsbodens 6, wobei die Begrenzungswände 17 der Belüftungsböden 6 jeweils in einem Freiraum geführt sind, der zwischen einer Seite eines dazugehörigen Antriebsträgers 8 und einer Seitenwand 16 eines dazugehörigen Zwischenträgers 15 ausgebildet ist.

Alternativ können die Seitenwände 16 der Zwischenträger 15 auch andere, nicht dargestellte, hochkant und/oder anderweitig stehende Wände überlappen, um eine Abdichtung zu erreichen. Alternative Abdichtungen, wie zum Beispiel flächig anliegende Dichtungen, sind ebenfalls möglich.

Dadurch wird ein Eindringen von Partikeln des Schüttguts beziehungsweise des Zementklinkers in die jeweils unter anderem die Antriebsträger 8 aufnehmenden Zwischenräume, die zwischen zwei Längsträger 3 und zwischen den jeweils darauf aufliegenden Reihen der Belüftungsböden 6 ausgebildet sind, wirkungsvoll vermieden, so dass ein Durchfallen von Partikeln des Schüttguts durch den Kühler grundsätzlich vermieden wird, wodurch insbesondere die dort angeordneten Gleitlager sowie die jeweils unterhalb dieser Zwischenräume angeordneten Zylinder-Kolben-Einheiten vor einer Verschmutzung durch diese Partikel geschützt sind.

Zur Realisierung eines Transports von auf den Belüftungsböden 6 sowie auf und neben den Mitnahmeelementen 14 und den Zwischenträgern 15 aufliegendem Schüttgut/Zementklinker, der in einer vorgesehenen Transportrichtung erfolgen soll, werden die in Querrichtung nebeneinander angeordneten Förderelemente mittels der dazugehörigen Zylinder-Kolben-Einheiten gleichzeitig in Transportrichtung bewegt, während die Zurückbewegungen der Förderelemente zeitlich versetzt erfolgen, wodurch das Schüttgut insgesamt in Transportrichtung gefördert wird.

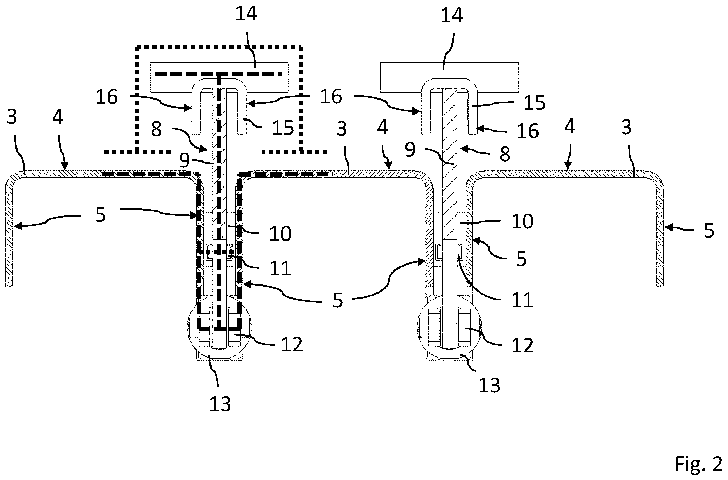

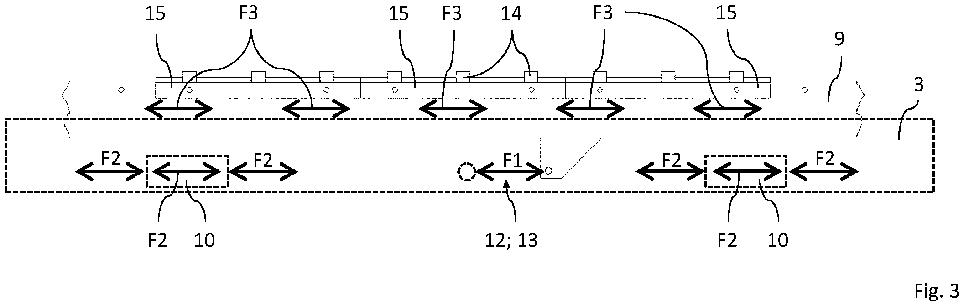

Die bei dieser Förderung des Schüttguts/Zementklinkers auftretenden Kräfte in Längsrichtung des Kühlers werden hauptsächlich an den Längsträgern 3 abgestützt, wobei die diese Längskräfte bewirkenden Hubkräfte der Zylinder-Kolben-Einheiten von entgegengesetzt gerichteten Reibungskräften im Wesentlichen vollständig oder zumindest größtenteils kompensiert werden, wie dies schematisch in den Fig. 2 und 3 dargestellt ist. In der Fig. 2 ist dabei mit punktierter Linienführung der Kraftfluss in dem Schüttgut/Zementklinker und mit gestrichelter Linienführung der Kraftfluss in dem Kühler gezeigt. In der Fig. 3 sind mit F1 die von den Zylinder-Kolben-Einheiten erzeugten Hubkräfte gekennzeichnet, die abwechselnd entlang der Längsrichtung des Kühlers in entgegengesetzten Richtungen wirken. Diesen Hubkräften wirken einerseits Reibungskräfte entgegen, die in den Linearführungen entstehen und die in der Fig. 3 mit F2 bezeichnet sind. Weiterhin wirken diesen Hubkräften F1 Kräfte F3 entgegen, die aus der Reibung zwischen dem Schüttgut und den dazu zeitweise relativ bewegten Förderelementen und Belüftungsböden 6 resultieren sowie einer nicht dargestellten Abdichtung.

Die zwei in Querrichtung des Kühlers jeweils außen liegenden Längsträger 3 des Kühlers weisen Befestigungsmittel in Form von Durchgangsöffnungen 18 auf, die jeweils der durch Verschraubungen bewirkten Befestigung mit einer nicht dargestellten Seitenwand des Kühlers oder mit einem außen liegenden Längsträger eines weiteren, insbesondere baugleichen Kühlers dienen.

### Bezugszeichenliste:

- 1: Querträger
- 2: Stütze
- 3: Längsträger
- 4: Oberwand des Längsträgers
- 5: Seitenwand des Längsträgers
- 6: Belüftungsboden
- 7: Durchgangsöffnung des Längsträgers
- 8: Antriebsträger
- 9: Grundkörper des Antriebsträgers
- 10: Gleitlagerführung
- 11: Führungselement
- 12: Kolben einer Zylinder-Kolben-Einheit
- 13: Zylinder einer Zylinder-Kolben-Einheit
- 14: Mitnahmeelement
- 15: Zwischenträger
- 16: Seitenwand des Zwischenträgers
- 17: Begrenzungswand des Belüftungsbodens
- 18: Durchgangsöffnung des außenliegenden Längsträgers

## Patentansprüche

1. Kühler zum Kühlen von Schüttgut mit
- einem Traggestell, das zumindest eine Mehrzahl von sich in einer Querrichtung des Kühlers erstreckenden, statischen Querträgern (1) aufweist,
- einer Mehrzahl von statischen Längsträgern (3), die sich in einer Längsrichtung des Kühlers erstrecken und die direkt oder indirekt mit den Querträgern (1) verbunden sind,
- einer Mehrzahl von statischen Belüftungsböden (6) zur Ablage des Schüttguts, wobei die Belüftungsböden (6) in einer Hochrichtung des Kühlers verlaufende Durchgangsöffnungen für einen Durchlass einer Kühlgasströmung aufweisen,
- einer Mehrzahl von beweglichen Förderelementen, wobei die Förderelemente jeweils
- einen Antriebsträger (8) aufweisen, der sich zwischen jeweils zwei der Belüftungsböden (6) in der Längsrichtung des Kühlers erstreckt, und
- einen oder mehrere an den Antriebsträgern (8) angebundene Mitnahmeelemente (14) aufweisen,
- einer Mehrzahl von Linearantrieben, die jeweils einerseits an einem der Antriebsträger (8) und andererseits an zumindest einem der Längsträger (3) abgestützt sind,
**dadurch gekennzeichnet, dass** die Belüftungsböden (6) auf Oberseiten der Längsträger (3) direkt oder indirekt angeordnet und mit den Längsträgern (3) direkt oder indirekt verbunden sind, wobei die Antriebsträger (8) sich zwischen jeweils zwei der Längsträger (3) in der Längsrichtung des Kühlers erstrecken.

2. Kühler gemäß Anspruch 1, **gekennzeichnet durch** Linearführungen zur Führung von Bewegungen der Antriebsträger (8) an den Längsträgern (3).

3. Kühler gemäß Anspruch 1 oder 2, **dadurch gekennzeichnet, dass** die Längsträger (3) in der Hochrichtung des Kühlers verlaufende Durchgangsöffnungen (7) für einen Durchlass der Kühlgasströmung aufweisen.

4. Kühler gemäß einem der vorhergehenden Ansprüche, **dadurch gekennzeichnet, dass** die Längsträger (3) jeweils als Profilträger mit zumindest einer Oberwand (4) und mit zwei sich von der Oberwand (4) erstreckenden Seitenwänden (5) ausgebildet sind.

5. Kühler gemäß Anspruch 4, **dadurch gekennzeichnet, dass** die Profilträger zumindest teilweise und/oder abschnittsweise eine U-förmige Querschnittsfläche aufweisen.

6. Kühler gemäß einem der vorhergehenden Ansprüche, **dadurch gekennzeichnet, dass** die zwei in Querrichtung des Kühlers jeweils außenliegenden Längsträger (3) Befestigungsmittel zur Befestigung mit einer Seitenwand des Kühlers oder mit einem außen liegenden Längsträger eines weiteren Kühlers aufweist.

7. Kühler gemäß einem der vorhergehenden Ansprüche, **dadurch gekennzeichnet, dass** an den Längsträgern (3) Dichtungsbauteile zur Abdichtung zwischen den Förderelementen und den Belüftungsböden (6) befestigt sind.

8. Kühler gemäß einem der vorhergehenden Ansprüche, **dadurch gekennzeichnet, dass** die Förderelemente jeweils einen Zwischenträger (15) aufweisen, wobei das oder die Mitnahmeelemente (14) mit dem Zwischenträger (15) und der Zwischenträger (15) mit dem Antriebsträger (8) verbunden sind.

9. Kühler gemäß Anspruch 8, **dadurch gekennzeichnet, dass** die Zwischenträger (15) jeweils zwei Seitenwände (16) aufweisen, die auf der von dem Antriebsträger (8) abgewandten Seite abdichtend neben einer statischen Begrenzungswand (17) geführt sind.

## Claims

1. A cooler for cooling bulk material, having
- a supporting frame, which has at least a plurality of static crossmembers (1) extending in a transverse direction of the cooler,
- a plurality of static longitudinal members (3), which extend in a longitudinal direction of the cooler and are connected directly or indirectly to the crossmembers (1),
- a plurality of static air admission gratings (6) for deposition of the bulk material, wherein the air admission gratings (6) have through openings extending in a vertical direction of the cooler for passage of a cooling gas flow,
- a plurality of movable conveying elements, wherein the conveying elements each
- have a drive member (8), which extends between in each case two of the air admission gratings (6) in the longitudinal direction of the cooler, and
- have one or more entrainment elements (14) connected to the drive members (8),
- a plurality of linear drives, each of which is supported, on the one hand, on one of the drive members (8) and, on the other hand, on at least one of the longitudinal members (3),
**characterized in that** the air admission gratings (6) are arranged directly or indirectly on upper sides of the longitudinal members (3) and are connected directly or indirectly to the longitudinal members (3), wherein the drive supports (8) each extend between two of the longitudinal members (3) in the longitudinal direction of the radiator.

2. The cooler as claimed in claim 1, **characterized by** linear guides for guiding movements of the drive members (8) on the longitudinal members (3).

3. The cooler as claimed in claim 1 or 2, **characterized in that** the longitudinal members (3) have through openings (7), which extend in the vertical direction of the cooler, for passage of the cooling gas flow.

4. The cooler as claimed in any of the preceding claims, **characterized in that** the longitudinal members (3) are in each case designed as profiled members having at least one upper wall (4) and having two side walls (5) extending from the upper wall (4).

5. The cooler as claimed in claim 4, **characterized in that** the profiled members have a U-shaped cross-sectional area, at least in part and/or in some section or sections.

6. The cooler as claimed in any of the preceding claims, **characterized in that** the two longitudinal members (3) which are each situated on the outside in the transverse direction of the cooler have fastening means for fastening to a side wall of the cooler or to an outer longitudinal member of a further cooler.

7. The cooler as claimed in any of the preceding claims, **characterized in that** sealing components for sealing between the conveying elements and the air admission gratings (6) are fastened on the longitudinal members (3).

8. The cooler as claimed in any of the preceding claims, **characterized in that** the conveying elements each have an intermediate member (15), wherein the entrainment element or elements (14) is/are connected to the intermediate member (15), and the intermediate member (15) is connected to the drive member (8).

9. The cooler as claimed in claim 8, **characterized in that** the intermediate members (15) each have two side walls (16) which, on the side facing away from the drive member (8), are guided in a sealing manner next to a static boundary wall (17).

## Revendications

1. Appareil réfrigérant pour refroidir un produit en vrac, avec :
- un cadre porteur, qui présente au moins une pluralité de supports transversaux statiques (1) s'étendant dans une direction transversale de l'appareil réfrigérant,
- une pluralité de supports longitudinaux statiques (3), qui s'étendent dans une direction longitudinale de l'appareil réfrigérant et qui sont reliés directement ou indirectement aux supports transversaux (1),
- une pluralité de fonds d'aération statiques (6) pour le dépôt du produit en vrac, les fonds d'aération (6) présentant des ouvertures de passage s'étendant dans une direction verticale de l'appareil réfrigérant pour un passage d'un courant de gaz réfrigérant,
- une pluralité d'éléments de transport mobiles, les éléments de transport présentant chacun
- un support d'entraînement (8), qui s'étend respectivement entre deux des fonds d'aération (6) dans la direction longitudinale de l'appareil réfrigérant, et
- un ou plusieurs éléments entraîneurs (14) reliés aux supports d'entraînement (8),
- une pluralité d'entraînements linéaires, qui sont chacun soutenus d'une part sur l'un des supports d'entraînement (8) et d'autre part sur au moins l'un des supports longitudinaux (3),
**caractérisé en ce que** les fonds d'aération (6) sont agencés directement ou indirectement sur des côtés supérieurs des supports longitudinaux (3) et sont reliées directement ou indirectement aux supports longitudinaux (3), les supports d'entraînement (8) s'étendant chacun entre deux des supports longitudinaux (3) dans la direction longitudinale de l'appareil réfrigérant.

2. Appareil réfrigérant selon la revendication 1, **caractérisé par** des guides linéaires pour guider les mouvements des supports d'entraînement (8) sur les supports longitudinaux (3).

3. Appareil réfrigérant selon la revendication 1 ou 2, **caractérisé en ce que** les supports longitudinaux (3) présentent des ouvertures de passage (7) s'étendant dans la direction verticale de l'appareil réfrigérant pour un passage du courant de gaz réfrigérant.

4. Appareil réfrigérant selon l'une quelconque des revendications précédentes, **caractérisé en ce que** les supports longitudinaux (3) sont chacun configurés sous forme de supports profilés avec au moins une paroi supérieure (4) et avec deux parois latérales (5) s'étendant depuis la paroi supérieure (4).

5. Appareil réfrigérant selon la revendication 4, **caractérisé en ce que** les supports profilés présentent, au moins partiellement et/ou par sections, une surface de section transversale en forme de U.

6. Appareil réfrigérant selon l'une quelconque des revendications précédentes, **caractérisé en ce que** les deux supports longitudinaux (3) situés respectivement à l'extérieur dans la direction transversale de l'appareil réfrigérant présentent des moyens de fixation pour la fixation à une paroi latérale de l'appareil réfrigérant ou à un support longitudinal situé à l'extérieur d'un autre appareil réfrigérant.

7. Appareil réfrigérant selon l'une quelconque des revendications précédentes, **caractérisé en ce que** des composants d'étanchéité sont fixés aux supports longitudinaux (3) pour assurer l'étanchéité entre les éléments de transport et les fonds d'aération (6).

8. Appareil réfrigérant selon l'une quelconque des revendications précédentes, **caractérisé en ce que** les éléments de transport présentent chacun un support intermédiaire (15), le ou les éléments entraîneurs (14) étant reliés au support intermédiaire (15) et le support intermédiaire (15) étant relié au support d'entraînement (8) .

9. Appareil réfrigérant selon la revendication 8, **caractérisé en ce que** les supports intermédiaires (15) présentent chacun deux parois latérales (16) qui sont guidées de manière étanche sur le côté détourné du support d'entraînement (8) à côté d'une paroi de délimitation statique (17).
